# EUROPÄISCHE PATENTANMELDUNG

(11) **EP 1 209 122 A1**
(43) Veröffentlichungstag der Anmeldung: **29.05.2002**
(21) Anmeldenummer: 00125715.3
(22) Anmeldetag: 24.11.2000
(51) Int. Cl.: C01B 15/023

(54) **Verfahren zur kontinuierlichen Oxidation**

(71) Anmelder: Degussa AG, 40474 Düsseldorf (DE)
(72) Erfinder: Maurer, Bernhard, 9710 Feistritz/Drau (AT)

(57) **Zusammenfassung**

Gegenstand der Erfindung ist ein kontinuierliches Verfahren zur Oxidation, bei dem die zu oxidierende Substanz und das oxidierende Gas im Gegenstrom geführt werden und das oxidierende Gas vor dem Eintritt in den Reaktor mit einem Teilstrom, enthaltend bereits oxidierte Substanz, vermischt wird. Als Mischorgan eignet sich besonders eine Venturi-Düse.

## Beschreibung

Die vorliegende Erfindung betrifft ein kontinuierliches Verfahren zur Oxidation. Dieses Verfahren ist insbesondere für den Oxidationsschritt im Anthrachinonverfahren zur Herstellung von Wasserstoffperoxid geeignet, in dem substituierte Anthrahydrochinone durch Oxidation mit einem sauerstoffenthaltenden Gas zu substituierten Anthrachinonen und Wasserstoffperoxid oxidiert werden.

Diese Oxidation wurde im Anthrachinonverfahren zunächst in hintereinandergeschalteten Begasungstürmen im Gleichstrom mit jeweils frischer Luft durchgeführt, was sowohl technisch aufwendig, als auch wirtschaftlich wenig sinnvoll war. Unter Einhaltung bestimmter blasengrößen, erhältlich durch feinporige Gasverteilerorgane und bestimmte Querschnittsbelastungen, konnte in einer Gleichstromführung von Luft und Arbeitslösung gemäß US 3 073 680 zwar die Oxidationsgeschwindigkeit erhöht werden, Probleme entstanden aber bei der Abscheidung des entstehenden Schaums und der Gas-Flüssig-Phasentrennung.

In US 2 902 347 wird die Durchführung der Oxidation mit einem Gegenstromverfahren beschrieben. Die zu oxidierende Hydrochinonlösung wird am Kopf einer Füllkörperkolonne aufgegeben und fließt der im Kolonnenboden eindosierten, aufsteigenden Luft entgegen. Nachteilig bei dieser Art der Gegenstromführung ist eine sehr niedrig liegende Flutungsgrenze der Kolonne, so dass, um einen möglichst vollständigen Umsatz zu erzielen, mehrere Kolonnen hintereinandergeschaltet werden müssen.

In DE-A-20 03 268 wird eine Kombination aus Gleich- und Gegenstromführung beschrieben. Mittels einer in zwei bis sechs Sektionen unterteilten Oxidationskolonne lassen sich die zuvor genannten Probleme lösen. In jeder Sektion dieser Kolonne werden die Arbeitslösung und das Oxidationsgas im Gleichstrom von unten nach oben geführt, von der gesamtkolonne aus gesehen bewegen sich aber Gas und flüssigkeit im Gegenstrom zueinander. Nachteilig bei dieser kaskadenförmigen Anordnung ist der durch Einbauten, wie siebböden, Netze oder Füllkörper, die zur innigen Durchmischung notwendig sind, verursachte Druckverlust.

Um den Druckverlust in der zuvor beschriebenen kaskadenförmigen Anordnung der Kolonne zu mindern, wird in EP-A-221 931 vorgeschlagen, die Oxidation in einem gleichstromreaktor ohne einbauten durchzuführen. Aus der hydrierten Arbeitslösung und dem Oxidationsgas entsteht ein koaleszenzgehemmtes system, in dem die einmal erzeugten Gasblasen, wenn keine äußere Einwirkung vorliegt, ihre Größe beibehalten. Als nachteilig bei dieser Ausführung erwies sich, dass das zu begasende Reaktorvolumen (m3 pro t H2O2) recht groß ist, was zu einer niedrigeren Raum-Zeit-Ausbeute und zu einem hohen hold-up an teurer Arbeitslösung führt. Zudem führt die Gleichstromführung zu einem erhöhten Anteil von Abbauprodukten.

Die aufgabe der vorliegenden erfindung war es also, die effizienz einer kontinuierlichen Oxidation, enthaltend das Reaktionsgemisch aus zu oxidierender substanz und oxidierendem Gas, zu erhöhen.

Die Aufgabe wird dadurch gelöst, dass bei der kontinuierlichen Oxidation das die zu oxidierende Substanz enthaltende flüssige Medium und das oxidierende Gas im Gegenstrom geführt werden, wobei das oxidierende Gas vor dem Eintritt in den, abgesehen von mindestens einem Verteilerorgan, im wesentlichen frei von koaleszenzfördernden Einbauten gestalteten Reaktor mit einem Teilstrom, enthaltend bereits oxidierte oder teilweise oxidierte Substanz, vermischt wird.

Dieses Ergebnis ist deshalb überraschend, da durch die Rückführung eines bereits oxidierten Produktteilstromes die Raum-Zeit-Ausbeute im Reaktor normalerweise verringert werden sollte. Tatsächlich bewirkt die Vermischung dieses Produktteilstromes mit dem Oxidationsgas vor dem Eintritt in den im wesentlichen frei von koaleszenzfördernden Einbauten gestalteten Reaktor, dass die im Mischorgan erzeugten Blasen ihre eingestellte Größe beibehalten. Dies bewirkt über das gesamte einbautenfreie Reaktorvolumen eine Reaktionsgeschwindigkeit, die deutlich über der liegt, die ohne Vorvermischung erzielt wird. Dadurch wird der Verlust an Raum-Zeit-Ausbeute, der durch die Rückführung eines Produktteilstromes entsteht, überkompensiert.

Gleichzeitig wird durch die Gegenstromführung die Bildung von Nebenprodukten, wie sie aus der Gleichstromführung bekannt ist, unterdrückt. Ferner bewirkt die Vorvermischung, eine Erhöhung des Durchoxidationsgrades. Durch Inkontaktbringen des Produktteilstromes mit frischem Oxidationsgas werden noch Anteile nicht oxidierter Substanz umgesetzt.

Zur Aufrechterhaltung der im Mischorgan eingestellten Blasengröße während des Verlaufes der Reaktion werden Oxidationsreaktoren verwendet, die frei von koaleszenzfördernden Einbauten sind. Gegebenenfalls, insbesondere zur Realisierung einer isothermen Reaktionsführung, können Plattenwärmetauscher eingebaut werden. Der Einbau der Wärmetauscherpakete sollte so erfolgen, dass das medium im Reaktor in seiner Strömungsrichtung nicht gestört wird, und die Breite der Spalte eines Plattenwärmetauschers ist so zu wählen, dass keine Koaleszenz herbeigeführt wird.

Das erfindungsgemäße Verfahren kann vorzugsweise so ausgeführt werden, dass die im Mischorgan erzeugten Gasblasen einen maximalen Durchmesser von 2,5 mm, besonders bevorzugt von kleiner als 1,5 mm, haben, um einen schnellen Transfer in die Flüssigphase zu ermöglichen.

Mögliche Mischorgane, mit denen diese Gasblasengröße erzielt werden kann, sind zum Beispiel Siebplatten, Fritten, statische Mischer oder Düsen.

Besonders geeignet für das erfindungsgemäße Verfahren ist eine Venturi-Düse. Diese bekannte Vorrichtung hat, verglichen mit anderen Mischorganen, einen niedrigen Druckverlust. In Abhängigkeit von der eingetragenen Energie und dem Volumenstrom wird die Nennweite der Kehle so eingestellt, dass der maximale Gasblasendurchmesser 2,5 mm nicht übersteigt.

Das Mischorgan ist bevorzugter Weise so angeordnet, dass die bereits oxidierte Substanz aus dem Oxidationsreaktor durch Naturumlauf zum Mischorgan gelangen kann. Das Mischorgan kann innerhalb oder außerhalb des Oxidationsreaktors, direkt an diesem, an dessen Boden oder in der Nähe des Bodens in der Seitenwand, angebracht sein. Es kann aber auch getrennt vom Reaktor, stehend oder liegend, angeordnet sein und mit ihm durch eine Leitung verbunden werden, sofern die erforderliche Höhendifferenz für den bevorzugten Naturumlauf eingehalten wird. Durch diese Anordnung kann auf zusätzliche Gasstrahler oder Pumpen verzichtet werden.

Eine besonders bevorzugte Ausführungsform des erfindungsgemäßen Verfahrens ist es, die Oxidation in einem koaleszenzgehemmten System durchzuführen. Unter koaleszenzgehemmten Systemen sind solche Gas/Flüssigsysteme zu verstehen, in denen die Gasblasen, wenn keine äußere Einwirkung vorliegt, ihre Größe beibehalten. Verantwortlich hierfür sind grenzflächenbeeinflussende Werte der Flüssigkeit, wie Zähigkeit und spezifische Oberflächenspannung, so wie die Art des Gases.

Wie in EP-A-221 931 beschrieben, erfüllen die im AO-Verfahren zur Herstellung von Wasserstoffperoxid eingesetzten Arbeitslösungen als Flüssigphase die Bedingungen für ein koaleszenzgehemmtes System dann, wenn der Summenquotient aller Grenzflächenspannungen der beteiligten Komponenten mindestens 16 mN/m erreicht, bevorzugt sind 17 bis 25 mN/m.

Durch einen einfachen Versuch läßt sich zeigen, dass oxidierte oder teilweise oxidierte Arbeitslösungen, enthaltend Wasserstoffperoxid, und Sauerstoff bzw. ein sauerstoffenthaltendes Gas ein koaleszenzgehemmtes System ausbilden, wenn die oben angegebene Bedingung für den Summenquotienten aller Grenzflächenspannungen der beteiligten Komponenten erfüllt ist. Somit kann bei entsprechender Wahl der Bestandteile des Reaktionssystems und seiner relativen Mengen sichergestellt werden, dass bei der Vorvermischung von Sauerstoff oder einem sauerstoffenthaltendem Gas und oxidierter oder teilweise oxidierter Arbeitslösung, enthaltend Wasserstoffperoxid, ein koaleszenzgehemmtes System entsteht und als solches im Oxidationsreaktor aufrecht erhalten wird.

Um eine möglichst quantitative Oxidation mit einem Durchoxidationsgrad größer als 90% zu erzielen, soll der Gasanteil der Vorvermischung aus Oxidationsgas und bereits oxidierter Substanz bei über 30 Vol%, bevorzugt bei über 40 Vol.% liegen. Besonders bevorzugt ist der Bereich zwischen 50 und 60 Vol.%.

Das erfindungsgemäße Verfahren ist besonders im oben genannten Prozeß geeignet zur Autoxidation von
a) substituierten Anthrahydrochinonen bzw. Gemischen aus substituierten Anthrahydrochinonen,
b) deren teil-kernhydrierten alpha- und beta-Tetrahydroderivaten und

### Mischungen aus a) und b)

zu den entsprechenden Anthrachinonen und Tetrahydroanthrachinonen.

Verwendung finden vor allem 2-Alkyl-substituierte Anthrahydrochinone und deren Gemische, mit einem Alkylrest mit 1 bis 8 C-Atomen, der linear oder verzweigt sein kann. Beispiele hierfür sind 2-Ethyl-, 2-Amyl- und 2-tert.-Butylanthrahydrochinon sowie deren Tetrahydro-Anthrahydrochinonderivate, sowie Mischungen aus mehreren Anthrahydrochinonen und deren Tetrahydroanthrahydrochinonderivaten.

Die erfindungsgemäße kontinuierliche Oxidation ist nicht beschränkt auf die Oxidation von Anthrahydrochinonen, sondern kann auch für andere gas/flüssig Autoxidationen, wie z.B. die Oxidation von Toluol zu Benzoesäure, von Cumol zu Cumolhydroperoxid, von p-Xylol zu Terephthalsäure, eingesetzt werden. Sollen dabei zusätzlich Katalysatoren Verwendung finden, so ist darauf zu achten, dass diese im Reaktionsgemisch gelöst oder suspendiert vorliegen um eine Koaleszenz der Gasblasen weitestgehend zu vermeiden.

Die zu oxidierende Substanz kann, wenn sie unter den Betriebsbedingungen flüssig vorliegt als solche, oder in Lösung eingebracht werden. Anthrahydrochinone werden bevorzugt in einem Lösungsmittelgemisch, enthaltend einen Chinonlöser und einen Hydrochinonlöser, gelöst.

Bekannte Chinonlöser sind Benzol, tert-Butylbenzol, tert-Butyltoluol, Trimethylbenzol, polyalkylierte Benzole und Methylnaphthalin.

Bekannte Hydrochinonlöser sind Alkylphosphate, Alkylphosphonate, Nonylalcohole, Alkylcyclohexanolester, N,N-Dialkylcarbonamide, Tetraalkylharnstoffe, N-Alkyl-2-pyrrolidone.

Die erfindungsgemäße Vorvermischung von Luft und Flüssigphase wird bevorzugt bei der Oxidation von substituierten Anthrahydrochinonen im AO-Verfahren zur Herstellung von Wasserstoffperoxid im beschriebenen, einbautenfreien Reaktortyp ausgeführt. Dabei wird ein Teilstrom der bereits oxidierten oder teilweise oxidierten, enthaltend Wasserstoffperoxid, Substanz und das oxidierende Gas im Gleichstrom, und die zu oxidierende Substanz hierzu im Gegenstrom geführt. Das bei der Oxidation entstandene, im oben beschriebenen organischen Lösungsmittelgemisch gelöste Wasserstoffperoxid, wird in einem nachgeschalteten Reaktionsschritt mit Wasser extrahiert. Das substituierte Anthrachinon wird einer katalytischen Hydrierung zugeführt, deren Produkt das substituierte Anthrahydrochinon ist, das wiederum wie oben beschrieben oxidiert wird.

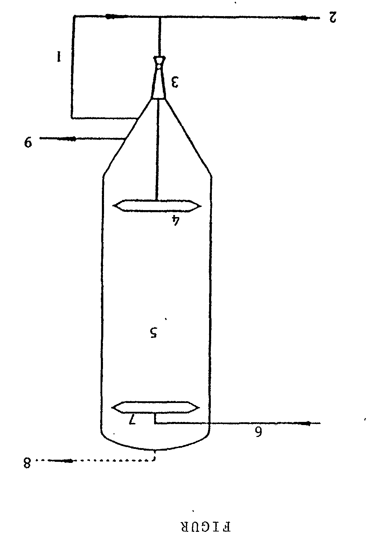

Die Figur zeigt eine mögliche Ausführungsform eines Oxidationsreaktors mit Vorvermischung des oxidierenden Gases und des Gemisches aus bereits oxidierter oder teilweise oxidierter Substanz und Wasserstoffperoxid als Flüssigphase. Bereits oxidierte Substanz 1 und das Oxidationsgas 2 werden über das Mischorgan 3 über einen Verteiler 4 in den Oxidationsreaktor 5 überführt. In den oberen Teil des Reaktors wird durch die Leitung 6 die zu oxidierende Substanz in den Reaktor eingeführt und mittels Verteiler 7 gleichmässig über den Reaktorquerschnitt verteilt. Sie strömt danach der vorvermischten Gas/Flüssigphase entgegen. Nicht abreagiertes Oxidationsgas verläßt den Reaktor durch die Leitung 8 und gelangt zu einem Gasabscheider. Die oxidierte Substanz wird über die Leitung 9 zur Extraktion geführt.

## Patentansprüche

1. Kontinuierliches Verfahren zur Oxidation bei dem ein die zu oxidierende Substanz enthaltendes flüssiges Medium und das oxidierende Gas im Gegenstrom geführt werden, **dadurch gekennzeichnet, dass** das oxidierende Gas vor dem Eintritt in den, abgesehen von mindestens einem Verteilerorgan, im wesentlichen frei von koaleszenzfördernden Einbauten gestalteten Reaktor mit einem Teilstrom, enthaltend bereits oxidierte oder teilweise oxidierte Substanz vermischt wird.

2. Verfahren nach Anspruch 1, **dadurch gekennzeichnet, dass** die Vermischung von bereits oxidierter oder teilweise oxidierter Substanz und oxidierendem Gas so ausgeführt wird, dass der Durchmesser der erzeugten Gasblasen maximal 2,5 mm, bevorzugt kleiner als 1,5 mm, ist.

3. Verfahren nach Anspruch 1 und 2, **dadurch gekennzeichnet, dass** als Mischorgan eine Venturi-Düse, eine Siebplatte oder Fritte Verwendung findet.

4. Verfahren nach Anspruch 1-3, **dadurch gekennzeichnet, dass** das Mischorgan so angeordnet ist, dass die oxidierte oder teilweise oxidierte Substanz aus dem Oxidationsreaktor durch Naturumlauf zum Mischorgan gelangen kann.

5. Verfahren nach Anspruch 1-4, **dadurch gekennzeichnet, dass** koaleszenzgehemmte Gas-Flüssig-Systeme eingesetzt werden, in deren Flüssigphasen der Summenquotient aller spezifischen Grenzflächenspannungen der beteiligten Komponenten mindestens einen Wert von 16 mN/m erreicht.

6. Verfahren nach Anspruch 1-5, **dadurch gekennzeichnet, dass** das Gemisch aus oxidierendem Gas und oxidierter Substanz einen Gasanteil von 40 Vol% bis 60 Vol.% besitzt.

7. Verfahren nach Anspruch 1-6, **dadurch gekennzeichnet, dass** die zu oxidierende Substanz ein substituiertes Anthrahydrochinon oder ein Gemisch von substituierten Anthrahydrochinonen und/oder deren kernhydrierten Tetrahydroderivaten ist.

8. Verfahren nach Anspruch 1-7, **dadurch gekennzeichnet, dass** die zu oxidierende Substanz als solche oder in Lösung eingebracht wird.

9. Verfahren zur Herstellung von Wasserstoffperoxid nach dem Anthrachinon-Kreisprozess, umfassend eine katalytische Hydrierung eine Oxidation der hydrierten Arbeitslösung mit Sauerstoff oder einem Sauerstoff enthaltendem Gas, wobei Wasserstoffperoxid und substituiertes Anthrachinon bzw. dessen kernhydriertes Tetrahydroanthrachinon enthaltendes Gemisch erhalten wird und eine Extraktion des Wasserstoffperoxides aus dem Gemisch erhalten nach der Oxidation, **dadurch gekennzeichnet, dass** die Oxidation gemäß der Ansprüche 7 oder 8 durchgeführt wird.
